(19) **Europäisches Patentamt / European Patent Office / Office européen des brevets**

(11) **EP 2 803 500 B1**

(12) **EUROPEAN PATENT SPECIFICATION**

(45) Date of publication and mention of the grant of the patent:
**09.11.2016 Bulletin 2016/45**

(21) Application number: **12868000.6**

(22) Date of filing: **11.09.2012**

(51) Int Cl.:
**B60C 5/14** (2006.01)     **B60C 1/00** (2006.01)

(86) International application number:
**PCT/JP2012/073211**

(87) International publication number:
**WO 2013/118343 (15.08.2013 Gazette 2013/33)**

(54) **PNEUMATIC TIRE**

LUFTREIFEN

BANDAGE PNEUMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.02.2012   JP 2012023053**

(43) Date of publication of application:
**19.11.2014   Bulletin 2014/47**

(73) Proprietor: **Sumitomo Rubber Industries, Ltd. Kobe-shi, Hyogo 651-0072 (JP)**

(72) Inventors:
• **MASUI, Tomomi Kobe-shi Hyogo 651-0072 (JP)**

• **SUGIMOTO, Mutsuki Kobe-shi Hyogo 651-0072 (JP)**

(74) Representative: **Manitz, Finsterwald & Partner GbR Martin-Greif-Strasse 1 80336 München (DE)**

(56) References cited:
**EP-A1- 2 298 577      EP-A1- 2 404 766**
**JP-A- H06 179 306      JP-A- 2004 136 766**
**JP-A- 2008 127 443      JP-A- 2011 051 320**
**US-A1- 2011 077 357**

**Description**

TECHNICAL FIELD

The present invention relates to a pneumatic tire including a polymer layer stack as an inner liner.

BACKGROUND ART

Recently, an attempt has been made to perform weight saving of tires because of strong social demands for fuel economy of automobiles. An attempt has also been made to perform weight saving of inner liners, among tire members, that are disposed at a tire radial inner side and have the function of improving air permeation resistance by decreasing the amount of air leaked to the outside from the inside of pneumatic tires (air permeation amount).

In a rubber composition for an inner liner, some degree of air permeation resistance is obtained by using a butyl-based rubber containing 70% by mass to 100% by mass of a butyl rubber and 30% by mass to 0% by mass of natural rubber, for example. An inner liner made of a butyl-based rubber is usually required to have a thickness of 0.6 mm to 1.0 mm for tires for passenger cars, and a thickness of about 1.0 mm to 2.0 mm for tires for trucks and buses. To achieve weight saving of tires, polymers are demanded which have more excellent air permeation resistance and can provide a thinner inner liner than the butyl-based rubber.

For example, Japanese Patent Laying-Open No. 9-019987 (PTD 1) discloses a layer stack for improving adhesiveness between an inner liner layer and a rubber layer. This publication describes that by providing an adhesive layer on the both sides of the inner liner layer, the adhesive layers come into contact with each other at overlapping portions of the inner liner layer, and they are firmly adhered together by heating, so that air pressure retention can be improved. These adhesive layers for overlapping of the inner liner layer, however, will come into contact with a bladder in a heated state in a vulcanization step, which will be disadvantageously stuck and adhered to the bladder.

Japanese Patent Laying-Open No. 2004-136766 (PTD 2) discloses a thermoplastic resin film and a pneumatic tire in which the distance in the tire radial direction from a plane passing through the center of cross section of cord of a carcass ply layer to the thermoplastic resin film is set to fall within a predetermined range to cause shearing force to be selectively exerted on the thermoplastic resin film having a higher Young's modulus than a ply rubber layer during running. This thermoplastic resin film, however, has poor adhesiveness at the time of vulcanization. In addition, stress is concentrated on the thermoplastic resin film having a high Young's modulus during running. Thus, during long-time running, detachment between the thermoplastic resin film and the carcass ply may occur, and cracks may occur in the thermoplastic resin film. As a result, there is a possibility that the function as an inner liner may be impaired.

Japanese Patent Laying-Open No. 2007-291256 (PTD 3) discloses a pneumatic tire that can simultaneously achieve suppression of air pressure decrease, improvement in durability and improvement in fuel consumption, in which a rubber composition for inner liner containing a specific ethylene-vinylalcohol copolymer in the range of 15 parts by mass to 30 parts by mass with respect to 100 parts by mass of a rubber component made of natural rubber and/or a synthetic rubber is used for an inner liner layer. In this pneumatic tire, however, the inner liner layer has a large thickness of 1 mm, which is not sufficient in improvement of weight saving of the tire.

Japanese Patent Laying-Open No. 9-165469 (PTD 4) discloses a pneumatic tire capable of improving adhesiveness with the inner surface of the tire or a carcass layer being a rubber composition by forming an inner liner layer using nylon having low air permeability. However, in the technique of Japanese Patent Laying-Open No. 9-165469 (PTD 4), there is a problem that a rubber cement composed of a rubber composition needs to be applied to a nylon film having been subjected to an RFL treatment so as to form a nylon film layer, resulting in complicated steps. Furthermore, in a vulcanization step, a tire vulcanization method is generally employed in which a bladder body is inserted into an unvulcanized tire (green tire) housed in a mold and is expanded to be pressed against the inner surface of the mold from the inside of the unvulcanized tire, and molding through vulcanization is performed. In the inner liner layer of PTD 4, the nylon film layer and the bladder will come into contact with each other in a heated state, disadvantageously causing the nylon film layer to be stuck and adhered to the bladder to be broken.

CITATION LIST

PATENT DOCUMENT

PTD 1: Japanese Patent Laying-Open No. 9-019987
PTD 2: Japanese Patent Laying-Open No. 2004-136766
PTD 3: Japanese Patent Laying-Open No. 2007-291256

PTD 4: Japanese Patent Laying-Open No. 9-165469

SUMMARY OF INVENTION

TECHNICAL PROBLEM

The present invention has an object to improve, in a pneumatic tire including an inner liner, basic properties of the inner liner, such as adhesiveness between the inner liner and a carcass ply rubber adjacent thereto, flex fatigue resistance and air permeability resistance, as well as to improve weight saving of the tire, operation stability and braking stability.

SOLUTION TO PROBLEM

The present invention relates to a pneumatic tire including an inner liner disposed inwardly in the tire and a carcass ply provided adjacent to the inner liner and having a cord embedded in a rubber layer. The inner liner is composed of a polymer layer stack including (a) a first layer of a polymer composition containing a styrene-isobutylene-styrene triblock copolymer and at least one kind of rubber component selected from among natural rubber, isoprene rubber and butyl rubber, the first layer having a thickness of 0.05 mm to 0.6 mm, and (b) a second layer of a polymer composition containing at least either one of a styrene-isoprene-styrene triblock copolymer and a styrene-isobutylene diblock copolymer as well as at least one kind of rubber component selected from among natural rubber, isoprene rubber and butyl rubber, the second layer having a thickness of 0.01 mm to 0.3 mm. The second layer is arranged so as to be in contact with the rubber layer of the carcass ply. A distance L from a plane passing through the center of cross section of the cord to the second layer is more than or equal to 0 and less than or equal to (1+D/2) mm where D denotes the diameter of the cord.

According to the invention, the first layer is made of a polymer composition containing more than or equal to 5% by mass and less than or equal to 40% by mass of the styrene-isobutylene-styrene triblock copolymer as well as more than or equal to 60% by mass and less than or equal to 95% by mass of the at least one kind of rubber component selected from the group consisting of natural rubber, isoprene rubber and butyl rubber, and the second layer is made of a polymer composition containing more than or equal to 10% by mass and less than or equal to 85% by mass of the at least either one of a styrene-isoprene-styrene triblock copolymer and a styrene-isobutylene diblock copolymer as well as more than or equal to 15% by mass and less than or equal to 90% by mass of the at least one kind of rubber component selected from the group consisting of natural rubber, isoprene rubber and butyl rubber.

In the pneumatic tire of the present invention, preferably, the polymer compositions of the first and second layers contain more than or equal to 0.1 part by mass and less than or equal to 5 parts by mass of sulfur, more than or equal to 1 part by mass and less than or equal to 5 parts by mass of stearic acid, more than or equal to 0.1 part by mass and less than or equal to 8 parts by mass of zinc oxide, more than or equal to 0.1 part by mass and less than or equal to 5 parts by mass of an antioxidant, and more than or equal to 0.1 part by mass and less than or equal to 5 parts by mass of a vulcanization accelerator with respect to 100 parts by mass of a polymer component.

In the pneumatic tire of the present invention, preferably, an interface between the polymer layer stack and the rubber layer of the carcass ply has an uneven shape.

ADVANTAGEOUS EFFECTS OF INVENTION

According to the present invention, since a polymer layer stack having been dynamically vulcanized is used for the inner liner, adhesive strength with an adjacent carcass ply rubber is improved. Moreover, the thickness thereof can be made thin to maintain air permeability resistance. As a result, flex fatigue resistance and operation stability can be improved in addition to weight saving of the pneumatic tire. Furthermore, since an inner liner portion can be increased in rigidity, braking stability is improved.

BRIEF DESCRIPTION OF DRAWINGS

Fig. 1 is a schematic sectional view showing the right half of a pneumatic tire in one embodiment of the present invention.
Fig. 2 is a schematic sectional view in proximity to the border between a carcass ply and an inner liner in the pneumatic tire in one embodiment of the present invention.
Fig. 3 is a schematic sectional view in proximity to the border between a carcass ply and an inner liner in a pneumatic tire in one embodiment of the present invention.

Fig. 4 is a schematic sectional view of an inner liner in one embodiment of the present invention.

DESCRIPTION OF EMBODIMENTS

The present invention relates to a pneumatic tire at least including an inner liner disposed inwardly in the tire and a carcass ply provided adjacent to the inner liner and having a cord embedded in a rubber layer. The inner liner is composed of a polymer layer stack including a first layer disposed inwardly in the tire and a second layer provided adjacent to the carcass ply.

The first layer is a polymer composition containing a styrene-isobutylene-styrene triblock copolymer and at least one kind of rubber component selected from among natural rubber, isoprene rubber and butyl rubber, and has a thickness of 0.05 mm to 0.6 mm.

The second layer is a polymer composition containing at least either one of a styrene-isoprene-styrene triblock copolymer and a styrene-isobutylene diblock copolymer as well as at least one kind of rubber component selected from among natural rubber, isoprene rubber and butyl rubber, and has a thickness of 0.01 mm to 0.3 mm.

With the second layer being arranged so as to come into contact with the rubber layer of the carcass ply, a distance L from a plane passing through the center of cross section of the cord to the second layer is more than or equal to 0 and less than or equal to (1+D/2) mm where D denotes the diameter of the cord.

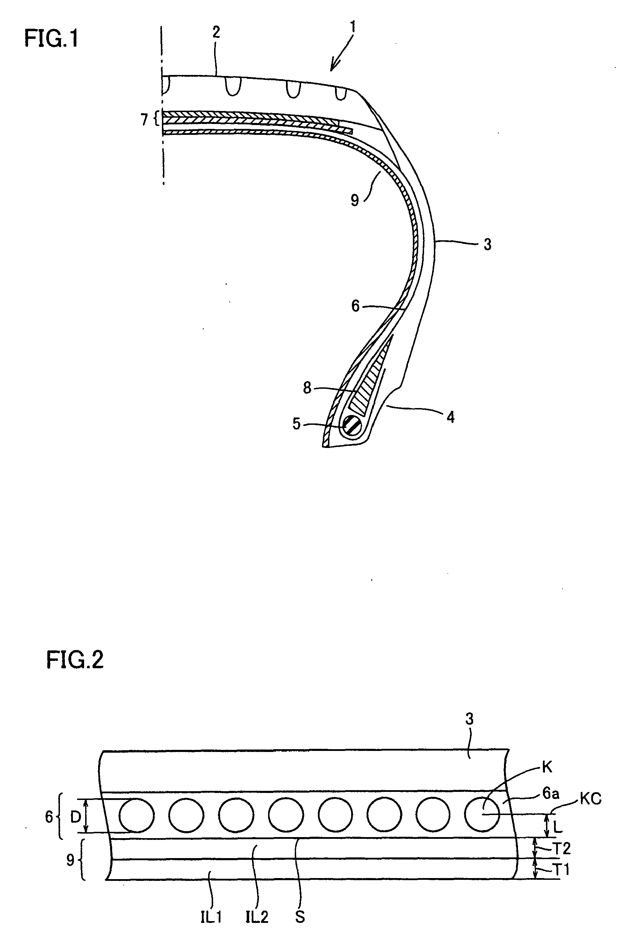

The pneumatic tire of the present invention will be described with reference to the drawings. Fig. 1 is a schematic sectional view showing the right half of a pneumatic tire of one embodiment of the present invention. A pneumatic tire 1 includes a tread part 2, a sidewall part 3 and a bead part 4 arranged so as to form a shape of toroid from the opposite ends of the tread part. Further, a bead core 5 is embedded in bead part 4. Also provided are a carcass ply 6 arranged to extend from one bead part 4 to the other bead part 4 (not shown) and is anchored by folding its opposite ends around bead cores 5, and a belt layer 7 composed of at least two plies outside a crown part of carcass ply 6.

Belt layer 7 is disposed such that two plies, which are formed of cords such as steel cords or aramid fibers, are arranged to allow the cords to cross each other between the plies normally at an angle of 5° to 30° relative to the tire circumferential direction. It should be noted that topping rubber layers can be provided on the outer sides of the ends of the belt layer to reduce detachment in the ends of the belt layer. Further, in carcass ply 6, organic fiber cords such as polyester, nylon, or aramid are arranged at substantially 90° relative to the tire circumferential direction. In a region surrounded by carcass ply 6 and its folded portion, a bead apex 8 is disposed to extend from the upper end of bead core 5 toward sidewall part 3. An inner liner 9 is disposed inwardly relative to carcass ply 6 in the tire radial direction so as to extend from one bead part 4 to the other bead part 4 (not shown).

Fig. 2 is a schematic sectional view in proximity to the border between the carcass ply and the inner liner in the pneumatic tire of the embodiment of the present invention. Inner liner 9 is composed of a polymer layer stack including a first layer IL1 and a second layer IL2. Second layer IL2 is in contact with a rubber layer 6a constituting carcass ply 6, and forms a boundary surface S. Carcass ply 6 is formed by burying a plurality of cords K within rubber layer 6a at regular intervals.

Here, in the pneumatic tire of the present invention, distance L from a plane KC passing through the center of cross section of cord K (a plane formed by connecting the centers of cross section of plurality of cords K) to second layer IL2 (namely, the distance to boundary surface S) is set at more than or equal to 0 and less than or equal to (1+D/2) mm where D denotes the diameter of cord K.

SIS and SIB to be principal components of second layer IL2 have higher rigidity than rubber layer 6a of the carcass ply. Therefore, by setting above-mentioned distance L as small as less than or equal to (1+D/2) mm, shearing stress acts in the tire circumferential direction of second layer IL2, and shearing rigidity in the tire circumferential direction is improved. As a result, operation stability during running with the pneumatic tire can be improved. On the other hand, if distance L is smaller than 0 mm, restraining force among cords K in carcass ply 6 decreases, so that the interval among cords K becomes likely to fluctuate, and rigidity in the tire circumferential direction decreases. It is noted that distance L being smaller than 0 mm means that boundary surface S between rubber layer 6a constituting carcass ply 6 and second layer IL2 is located closer to the sidewall part 3 side than plane KC passing through the center of cross section of cord K.

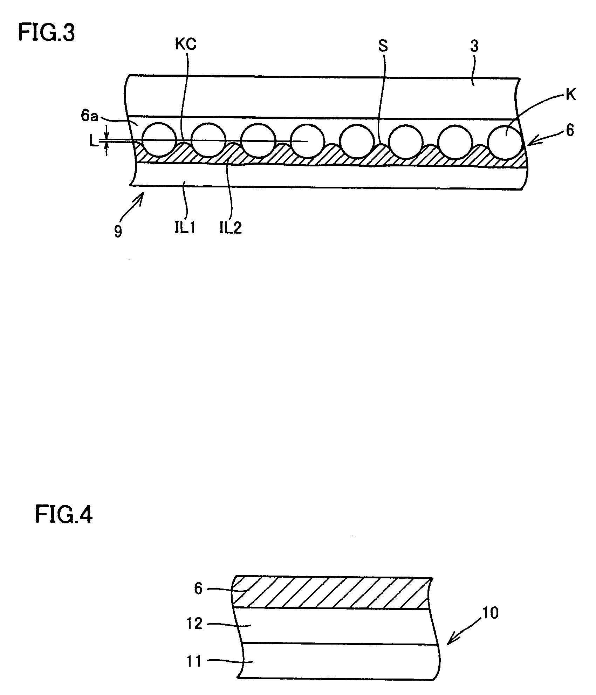

Fig. 3 is a schematic sectional view in proximity to the border between a carcass ply and an inner liner of another embodiment. Second layer IL2 of the polymer layer stack intrudes in between the cords of carcass ply 6, so that boundary surface S between second layer IL2 and rubber layer 6a has an uneven shape. Here, distance L from plane KC passing through the center of cross section of cord K to boundary surface S between rubber layer 6a and second layer IL2 is substantially 0. With this structure, shearing rigidity in the tire circumferential direction can also be improved. As a result, operation stability during running with the pneumatic tire can be improved. It is noted that distance L in the case where boundary surface S has an uneven shape denotes the average value of a shortest distance L' to boundary surface S between rubber layer 6a and second layer IL2.

<Polymer Layer Stack>

[Composite of First Layer]

The first layer is composed of a polymer composition containing a styrene-isobutylene-styrene triblock copolymer (SIBS) and at least one kind of rubber component selected from among natural rubber, isoprene rubber and butyl rubber.

Since a SIBS film has excellent air permeability resistance due to contribution by the isobutylene block included in the SIBS, an inner liner in which this film is used has excellent air permeability resistance. Further, the molecular structure of the SIBS is completely saturated except aromatic ring, so that the SIBS is restrained from being deteriorated and hardened and therefore has excellent durability. When the SIBS is used, the thickness of a film can be made thin to enable weight saving of tires, and improvement in fuel efficiency can be achieved.

Although there is no particular limitation on the molecular weight of the SIBS, the weight-average molecular weight obtained by a GPC measurement is preferably 50,000 to 400,000 in view of SIBS's rubber elasticity, fluidity, molding workability into an inner liner, and the like. When the weight-average molecular weight is less than 50,000, rubber elasticity, tensile strength and tensile elongation of the SIBS may decrease. When the weight-average molecular weight is more than 400,000, molding workability into an inner liner (extrusion molding workability, etc.) may deteriorate because of reduction in fluidity of the SIBS. As for the SIBS, the content of the styrene component in the SIBS is preferably 10% by mass to 40% by mass from the viewpoint of making air permeability resistance and durability more favorable.

The SIBS can be obtained by a conventional polymerization method of a vinyl-based compound, such as a living cationic polymerization method (see Japanese Patent Laying-Open No. 62-48704 and Japanese Patent Laying-Open No. 64-62308).

(Rubber Component)

The polymer composition of the first layer contains a rubber component. The rubber component can provide the polymer composition of the first layer with tackiness before vulcanization with an adjacent member such as a carcass ply. Further, because of the vulcanization reaction with sulfur, the rubber component can provide the polymer composition with vulcanization adhesiveness with an adjacent member such as a carcass ply. The rubber component contains at least one kind selected from the group consisting of natural rubber, isoprene rubber, and butyl rubber, and it is particularly preferable to contain natural rubber in view of breaking strength and adhesiveness.

The content of the rubber component is preferably more than or equal to 60% by mass and less than or equal to 95% by mass of the polymer component in the polymer composition. When the content of the rubber component is less than 60% by mass, the viscosity of the polymer composition increases to cause extrusion molding workability to deteriorate, so that the first layer cannot be made thin. When the content of the rubber component is more than 95% by mass, air permeation resistance of the polymer sheet may be reduced. The content of the rubber component is preferably more than or equal to 70% by mass and less than or equal to 90% by mass of the polymer component in view of tackiness before vulcanization and vulcanization adhesiveness.

(Sulfur)

The polymer composition of the first layer contains sulfur. As sulfur, sulfur generally used in the rubber industry for vulcanization can be used. It is particularly preferable to use insoluble sulfur. As used herein, insoluble sulfur refers to sulfur obtained by heating and rapidly cooling natural sulfur $S_8$, and polymerizing it so as to become $S_x$ (x = 100,000 to 300,000). The use of insoluble sulfur can prevent blooming that would usually occur when sulfur is used as a rubber vulcanization agent.

The sulfur content is more than or equal to 0.1 part by mass and less than or equal to 5 parts by mass with respect to 100 parts by mass of the polymer component. When the sulfur content is less than 0.1 part by mass, the vulcanization effect of the rubber component cannot be achieved. When the sulfur content is more than 5 parts by mass, the hardness of the polymer composition increases, and when the polymer sheet is used as an inner liner, the durability of a pneumatic tire may deteriorate. The sulfur content is more preferably more than or equal to 0.3 part by mass and less than or equal to 3.0 parts by mass.

(Additive in Polymer Composition)

The polymer composition can contain additives such as stearic acid, zinc oxide, an antioxidant, and a vulcanization accelerator. Stearic acid functions as a vulcanization assistant for the rubber component. The content of stearic acid is preferably more than or equal to 1 part by mass and less than or equal to 5 parts by mass with respect to 100 parts by mass of the polymer component. When the content of stearic acid is less than 1 part by mass, the effect as a vulcanization assistant cannot be achieved. When the content of stearic acid is more than 5 parts by mass, the viscosity of the polymer composition may be reduced, and the breaking strength may be reduced, which is not preferable. The content of stearic acid is more preferably more than or equal to 1 part by mass and less than or equal to 4 parts by mass.

Zinc oxide functions as a vulcanization assistant of the rubber component. The content of zinc oxide is preferably more than or equal to 0.1 part by mass and less than or equal to 8 parts by mass with respect to 100 parts by mass of the polymer component. When the content of zinc oxide is less than 0.1 part by mass, the effect as a vulcanization assistant cannot be achieved. When the content of zinc oxide is more than 8 parts by mass, the hardness of the polymer composition increases, and the durability of a pneumatic tire may deteriorate. The content of zinc oxide is more preferably more than or equal to 0.5 part by mass and less than or equal to 6 parts by mass.

An antioxidant has the function of preventing a series of degradations, such as oxidation degradation, thermal degradation, ozone degradation, and fatigue degradation. Antioxidants are classified into a primary antioxidant including amines and phenols and a secondary antioxidant including sulfur compounds and phosphites. The primary antioxidant has the function of supplying hydrogen to various polymer radicals to stop a chain reaction of autooxidation, and the secondary antioxidant exhibits a stabilizing effect by turning hydroxyperoxide into stable alcohol.

The antioxidant includes amines, phenols, imidazoles, phosphors, thioureas, and the like. One kind of the above-mentioned antioxidants may be used solely, or two or more kinds of them may be used in combination. Particularly, it is preferable to use N-(1,3-dimethylbutyl)-N'-phenyl-p-phenylenediamine.

The antioxidant content is preferably more than or equal to 0.1 part by mass and less than or equal to 5 parts by mass with respect to 100 parts by mass of the polymer component. When the antioxidant content is less than 0.1 part by mass, the antioxidant effect cannot be achieved. When the antioxidant content is more than 5 parts by mass, the blooming phenomenon will occur in the polymer composition. The antioxidant content is more preferably more than or equal to 0.3 part by mass and less than or equal to 4 parts by mass.

As the vulcanization accelerator, thiurams, thiazoles, thioureas, dithiocarbamates, guanidines, sulfenamides, and the like can be used. One kind of the above-mentioned vulcanization accelerators may be used solely, or two or more kinds of them may be used in combination. Particularly, it is preferable to use dibenzothiazyl disulfide.

The content of the vulcanization accelerator is preferably more than or equal to 0.1 part by mass and less than or equal to 5 parts by mass with respect to 100 parts by mass of the polymer component. When the content of the vulcanization accelerator is less than 0.1 part by mass, the vulcanization acceleration effect cannot be achieved. When the content of the vulcanization accelerator is more than 5 parts by mass, the hardness of the polymer composition increases, and the durability of a pneumatic tire may deteriorate. In addition, the raw material cost of the polymer composition increases. The content of the vulcanization accelerator is more preferably more than or equal to 0.3 part by mass and less than or equal to 4 parts by mass.

In the rubber composition of the first layer, the SIBS, which is a thermoplastic elastomer, serves as the matrix phase, and the rubber component is dispersed as the island phase. The additive component, such as sulfur, reacts with this, and the rubber component serving as the island phase produces a crosslinking reaction. The rubber component is dynamically crosslinked in an extruder as will be described later, and forms so-called dynamic crosslinking. Even if the rubber component is crosslinked in the extruder, the shear viscosity of the whole system is maintained low and extrusion molding is possible since the matrix phase of the system is composed of the thermoplastic elastomer component.

[Thickness of First Layer]

The first layer has a thickness (T1) of 0.05 mm to 0.6 mm. When the thickness (T1) of the first layer is less than 0.05 mm, the first layer may be broken by a pressing pressure during vulcanization of a green tire in which the polymer layer stack is used as the inner liner, and thus an air leak phenomenon may occur in the resultant tire. In contrast, when the thickness (T1) of the first layer is more than 0.6 mm, tire weight increases and fuel efficiency deteriorates. The thickness (T1) of the first layer is preferably 0.05 mm to 0.4 mm. The first layer can be obtained by forming a polymer composition into a film by a conventional method of forming a thermoplastic resin or a thermoplastic elastomer into a film, such as extrusion molding or calender molding. The above-mentioned polymer composition can contain other additives, such as a reinforcer, a vulcanization agent, a vulcanization accelerator, various oils, an antioxidant, a softener, a plasticizer, and a coupling agent.

[Composition of Second Layer]

The second layer is composed of a polymer composition containing at least either one of a styrene-isoprene-styrene triblock copolymer (SIS) and a styrene-isobutylene diblock copolymer (SIB) as well as at least one kind of rubber component selected from among natural rubber, isoprene rubber and butyl rubber.

Since an isoprene block of the SIS and an isobutylene block of SIB are soft segments, a polymer film containing the SIS or the SIB is easily bonded to a rubber component through vulcanization. Therefore, through use of an inner liner including the second layer containing the SIS or the SIB, a pneumatic tire excellent in adhesive strength between the inner liner and a rubber layer of the carcass ply can be obtained. Accordingly, the durability of the pneumatic tire and operation stability thereof during running can be improved.

Although there is no particular limitation on the molecular weight of the SIS, the weight-average molecular weight obtained by the GPC measurement is preferably 100,000 to 290,000 in view of SIS's rubber elasticity and molding workability into an inner liner. When the weight-average molecular weight is less than 100,000, SIS's rubber elasticity and tensile strength may decrease. When the weight-average molecular weight is more than 290,000, molding workability into an inner liner (extrusion molding workability, etc.) may deteriorate because of reduction in the SIS's flowability. The content of a styrene component in the SIS is preferably 10% by mass to 30% by mass in view of SIS's tackiness and rubber elasticity as well as adhesive strength of the second layer with the first layer and the carcass ply.

The polymerization degree of each block constituting the SIS is preferably from about 500 to 5,000 for an isoprene block, and preferably from about 50 to 1,500 for a styrene block, in view of SIS's rubber elasticity and handling. The SIS can be obtained by a conventional polymerization method of a vinyl-based compound, such as a living cationic polymerization method.

It is preferred to use a linear one as the SIB in view of rubber elasticity and adhesive strength of the second layer with the first layer and the carcass ply. Although there is no particular limitation on the molecular weight of the SIB, the weight-average molecular weight obtained by the GPC measurement is preferably 40,000 to 120,000 in view of SIB's rubber elasticity and molding workability into an inner liner. When the weight-average molecular weight is less than 40,000, tensile strength may decrease. When the weight-average molecular weight is more than 120,000, the molding workability into an inner liner may deteriorate because of reduction in SIB's flowability. The content of a styrene component in the SIB is preferably 10% by mass to 35% by mass in view of SIB's tackiness and rubber elasticity as well as adhesive strength of the second layer with the first layer and the carcass ply.

The SIB can be obtained by a conventional polymerization method of a vinyl-based compound, such as a living cationic polymerization method. The second layer may be a mixture of the SIS and the SIB, or may have a multi-layered structure of a SIS-containing layer and a layer containing a SIB layer.

(Rubber Component)

The polymer composition of the second layer contains a rubber component. The rubber component can provide the polymer composition of the first layer with tackiness before vulcanization with an adjacent member, such as a carcass ply. Further, because of the vulcanization reaction with sulfur, the polymer composition can be provided with vulcanization adhesiveness with an adjacent member, such as the carcass ply. The rubber component contains at least one kind selected from the group consisting of natural rubber, isoprene rubber and butyl rubber, and it is particularly preferable to contain natural rubber in view of breaking strength and adhesiveness.

The content of the rubber component is more than or equal to 15% by mass and less than or equal to 90% by mass in the polymer component of the polymer composition. When the content of the rubber component is less than 15% by mass, the viscosity of the polymer composition increases to cause extrusion molding workability to deteriorate, so that there is a possibility that the second layer cannot be made thin. When the content of the rubber component is more than 90% by mass, air permeation resistance of the second layer may be reduced. In the range of the above-described blending quantity of rubber component, tackiness before vulcanization and adhesiveness after vulcanization are improved.

The polymer composition can contain additives, such as stearic acid, zinc oxide, an antioxidant, and a vulcanization accelerator, similarly to the first layer. The type and blending quantity can be suitably adjusted in accordance with required properties.

In the rubber composition of the second layer, the SIB or the SIS, which is a thermoplastic elastomer, serves as the matrix phase, and the rubber component is dispersed as the island phase. An additive component such as sulfur reacts with this, and the rubber component serving as the island phase produces a crosslinking reaction. The rubber component forms dynamic crosslinking in an extruder as will be described later. The shear viscosity of the whole system is maintained low and extrusion molding is possible since the matrix phase of the system is composed of thermoplastic elastomer component.

The second layer can be obtained by forming a rubber composition containing the SIS and/or SIB and optionally added additives into a film by a conventional method of forming a thermoplastic resin or a thermoplastic elastomer into a film, such as extrusion molding or calender molding.

[Thickness of Second Layer]

The second layer has a thickness (T2) of 0.01 mm to 0.3 mm. Here, when the second layer is composed of one layer, the thickness (T2) of the second layer refers to the thickness of the one layer. When the second layer has a multi-layered structure, such as a two-layered structure, the thickness refers to the total thickness of the multi-layered structure. When the thickness (T2) of the second layer is less than 0.01 mm, the second layer may be broken by a pressing pressure during vulcanization of a green tire in which the polymer layer stack is used as the inner liner, and vulcanization adhesion strength may deteriorate. On the other hand, when the thickness (T2) of the second layer is more than 0.3 mm, tire weight increases and fuel efficiency deteriorates. The thickness (T2) of the second layer is preferably 0.05 mm to 0.2 mm.

[Other Polymer Components of First and Second Layers]

One or more kinds of thermoplastic elastomers selected from the group consisting of styrene-isoprene butadiene-styrene copolymer (SIBS), styrene-ethylene butene-styrene copolymer (SEBS), styrene-ethylene propylene-styrene copolymer (SEPS), styrene-ethylene ethylene propylene-styrene copolymer (SEEPS), styrene-butadiene butylene-styrene copolymer (SBBS), and these thermoplastic elastomers with an epoxy group introduced therein can be blended into the first and second layers as other polymer components. Examples of thermoplastic elastomer having an epoxy group include an epoxy-modified styrene-butadiene-styrene copolymer (as a specific example, epoxidized SBS, "Epofriend A1020" manufactured by Daicel Chemical Industries, Ltd., having a weight average molecular weight of 100,000 and an epoxy equivalent of 500 etc.), for example.

<Structure of Polymer Layer Stack>

The structure of the polymer layer stack applied to the inner liner of the present invention is shown in Fig. 4. In Fig. 4, polymer layer stack 10 is composed a first layer 11 serving as the first layer and a second layer 12. Polymer layer stack 10 is arranged toward the outer side in the tire radial direction such that second layer 12 contacts carcass ply 6. Accordingly, the adhesive strength between second layer 12 and carcass ply 6 can be increased in the vulcanization step of a tire.

The polymer layer stack can be obtained by using the polymer rubber composition of the first layer and the polymer composition of the second layer and performing lamination extrusion, such as laminate extrusion or coextrusion, in the order shown in Fig. 4.

<Method for Manufacturing Pneumatic Tire>

The pneumatic tire of the present invention can be manufactured using a general manufacturing method. That is, it can be manufactured by applying above-described polymer layer stack 10 to the inner liner of a green tire of pneumatic tire 1 and molding it through vulcanization together with other members. When arranging polymer layer stack 10 in the green tire, polymer layer stack 10 is arranged toward the outer side in the tire radial direction such that second layer 12 contacts carcass ply 6. With this arrangement, the adhesive strength between the second layer and carcass ply 6 can be improved in the tire vulcanization step.

Here, the rubber composition constituting the first layer and/or the second layer of the polymer layer stack is in a softened state (intermediate state between solid and liquid) in a mold at the temperature during vulcanization, for example, 150°C to 180°C. Therefore, when the mold is opened after vulcanization if the rubber composition is in the softened state, the shape of the polymer layer stack will be deformed. Moreover, since reactivity is higher in the softened state than in the solid state, the stack may be stuck and adhered to an adjacent member.

Therefore, it is preferable to provide a cooling step after vulcanization. By the cooling method, the thermoplastic elastomer can be solidified by quenching at 120°C or lower for 10 seconds or more immediately after vulcanization. There is a cooling method of quenching the inside of a bladder at a temperature in the range of 50°C to 120°C. For a coolant, one or more of coolants selected from air, water vapor, water, and oil are used.

The cooling time is preferably 10 seconds to 300 seconds. When the cooling time is less than 10 seconds, the thermoplastic elastomer may not be sufficiently cooled, which causes the inner liner to be still fused with the bladder upon opening of the mold, so that the air-in phenomenon may occur. When the cooling period is more than 300 seconds, productivity deteriorates. The cooling time is more preferably 30 seconds to 180 seconds.

Examples

Although the present invention will be described hereinbelow in detail citing examples, the present invention is not limited to these examples.

A pneumatic tire including an inner liner in which a polymer layer stack having combined therein the formulation of the first layer shown in Table 1 and the formulation of the second layer shown in Table 2 was used was produced.

Table 3 shows examples as Comparative Examples 1 to 6 in which the ratio of rubber component of the first layer was varied. Table 4 shows examples as Examples 1 to 8 in which the ratio of rubber component of the second layer was varied. Furthermore, Table 5 shows examples as Examples 9 to 11 and Comparative Examples 7 and 8 in which distance L from plane KC passing through the center of cross section of cord to the second layer was varied.

<Production of Polymer Layer Stack>

The polymer component and compounding agents of the polymer compositions of the first and second layers were charged into a twin-screw extruder (screw diameter: φ50 mm; L/D: 30; cylinder temperature: 200°C), and kneaded to produce a pellet of polymer composition dynamically vulcanized with thermoplastic elastomer components of SIBS, SIB and SIS, a rubber component, sulfur, and additives was produced.

Then, a T-die extruder (screw diameter: φ80 mm; L/D: 50; die gap width: 500 mm; cylinder temperature: 220°C) was used to produce the first layer and second layer of polymer sheets. They were bonded together to produce a polymer layer stack.

In the above-mentioned twin-screw extruder, the SIBS, SIB and SIS, which are thermoplastic elastomers, serve as the matrix phase, and the rubber component is dispersed as the island phase. Furthermore, the rubber component and the additive component react with each other in the twin-screw extruder, and the rubber component serving as the island phase produces a crosslinking reaction. Since the rubber component is dynamically crosslinked in the twin-screw extruder, so-called dynamic crosslinking is formed. Even if the rubber component is crosslinked in the extruder, the shear viscosity of the whole system is low and extrusion molding is possible since the matrix phase of the system is composed of the thermoplastic elastomer component.

In the pellet of the dynamically-crosslinked polymer composition obtained with the twin-screw extruder, the rubber component is crosslinked, but the thermoplastic elastomer serving as the matrix phase retains plasticity, and the whole composite maintains plasticity. Therefore, plasticity is exhibited also in T-die extrusion, and the composite can be formed into the shape of a sheet.

Furthermore, since the pellet of the dynamically-crosslinked polymer composition has a crosslinked rubber component, the polymer composition constituting the inner liner can be restrained from intruding into the carcass ply even when heating a pneumatic tire when producing the pneumatic tire applying a polymer sheet produced with this pellet to the inner liner.

It is noted that the following polymer components were used for the polymer compositions of the first and second layers. Details of their formulations are shown in Tables 1 and 2.

[SIBS]

As a styrene-isobutylene-styrene triblock copolymer (SIBS), "SIBSTAR 102T (Shore A hardness: 25; the content of the styrene component: 15% by mass; weight average molecular weight obtained by GPC measurement: 100,000)" provided by Kaneka Corporation was prepared.

[SIB]

Into a 2L reaction container having an agitator, 589 mL of methylcyclohexane (dried with molecular sieves), 613 ml of n-butyl chloride (dried with molecular sieves), and 0.550g of cumyl chloride were added. The reaction container was cooled to -70°C, and then 0.35 mL of α-picoline (2-methylpyridine) and 179 mL of isobutylene were added. Further, 9.4 mL of titanium tetrachloride was added to start polymerization. They were reacted with each other for 2.0 hours while stirring the solution at -70°C. Next, 59 mL of styrene was added to the reaction container, and reaction was continued for another 60 minutes. Thereafter, a large amount of methanol was added to stop the reaction. After removing a solvent and the like from the reaction solution, the polymer was dissolved with toluene and rinsed twice. This toluene solution was added to methanol to precipitate a polymer. The polymer thus obtained was dried at 60°C for 24 hours, thereby obtaining a linear styrene-isobutylene diblock copolymer (SIB). The content of the styrene component of the obtained SIB was 15% by mass, and the weight average molecular weight obtained by GPC measurement was 70,000.

[SIS]

D1161JP manufactured by Kraton Performance Polymers Inc. (the content of the styrene component: 15% by mass; weight-average molecular weight obtained by GPC measurement: 150,000) was used.

[Table 1]

| Formulation of First Layer | | | | | | |
|---|---|---|---|---|---|---|
| | | Example Formulation | | Comparative Formulation | | |
| | | A1 | A2 | A3 | A4 | A5 |
| Formulation (parts by mass) | IIR(*1) | 60 | 95 | - | 50 | 98 |
| | Natural rubber (*2) | - | - | - | - | - |
| | SIBS (*3) | 40 | 5 | 100 | 50 | 2 |
| | Carbon black (*4) | - | - | - | - | - |
| | Stearic acid (*5) | 3 | 3 | 3 | 3 | 3 |
| | Zinc oxide (*6) | 5 | 5 | 5 | 5 | 5 |
| | Antioxidant (*7) | 1 | 1 | 1 | 1 | 1 |
| | Vulcanization accelerator (*8) | 1 | 1 | 1 | 1 | 1 |
| | Sulfur (*9) | 0.5 | 0.5 | 0.5 | 0.5 | 0.5 |

[Table 2]

| Formulation of Second Layer | | | | | | | |
|---|---|---|---|---|---|---|---|
| | | Example Formulation | | | | Comparative Formulation | |
| | | B1 | B2 | B3 | B4 | B5 | B6 |
| Formulation (parts by mass) | SIS (*10) | 10 | - | 80 | 85 | 100 | - |
| | SIB (*11) | - | 10 | - | - | - | 100 |
| | Natural rubber (*2) | - | - | 20 | - | - | - |
| | IIR (*1) | 90 | 90 | - | 15 | - | - |
| | Stearic acid (*5) | 3 | 3 | 3 | 3 | 3 | 3 |
| | Zinc oxide (*6) | 5 | 5 | 5 | 5 | 5 | 5 |
| | Antioxidant (*7) | 1 | 1 | 1 | 1 | 1 | 1 |
| | Vulcanization accelerator (*8) | 1 | 1 | 1 | 1 | 1 | 1 |
| | Sulfur (*9) | 0.5 | 0.5 | 0.5 | 0.5 | 0.5 | 0.5 |

(*1) IIR : "Exxon Chlorobutyl 1066" manufactured by Exxon Mobil Corporation
(*2) Natural rubber: TSR20
(*3) SIBS: the above-described SIBS
(*4) Carbon black: "Seast V" manufactured by Tokai Carbon Co., Ltd. (nitrogen adsorption specific surface area: $27m^2/g$)
(*5) Stearic acid: "Lunac S30" manufactured by Kao Corporation
(*6) Zinc oxide : "Zinc White No.1" manufactured by Mitsui Mining & Smelting Co., Ltd.
(*7) Antioxidant: "Noclac 6C" manufactured by Ouchi Shinko Chemical Industrial Co., Ltd.
(*8) Vulcanization accelerator: "Nocceler DM" manufactured by Ouchi Shinko Chemical Industrial Co., Ltd.
(*9) Sulfur: "Sulfur Powder" manufactured by Tsurumi Chemical Industry Co., Ltd.
(*10) SIS: the above-described SIS
(*11) SIB: the above-described SIB

<Manufacturing of Pneumatic Tire>

A green tire of 195/65R15 size having the basic structure shown in Fig. 1 in which the above-described polymer layer stack was used for the inner liner was manufactured, and was press vulcanized at 170°C for 20 minutes to manufacture a pneumatic tire. Polyester 1670 dtex having a diameter (D) of 0.7 mm was used for the cords of the carcass ply.

The specifications of each pneumatic tire of the respective Comparative Examples and Examples are shown in Tables 3 to 5.

[Table 3]

| Rubber Fraction of First Layer | | | | | | | | | |
|---|---|---|---|---|---|---|---|---|---|
| | | | | Comparative Example | | | | | |
| | | | | 1 | 2 | 3 | 4 | 5 | 6 |
| Inner Liner Structure | First Layer | Layer Thickness (mm) | | 0.25 | 0.25 | 0.25 | 0.25 | 0.25 | 0.25 |
| | | Used Formulation | | A3 | A4 | A5 | A3 | A4 | A5 |
| | Second Layer | Layer Thickness (mm) | | 0.05 | 0.05 | 0.05 | 0.05 | 0.05 | 0.05 |
| | | Used Formulation | | B5 | B5 | B5 | B6 | B6 | B6 |
| | Distance L (mm) | | | 0 | 0 | 0 | 0 | 0 | 0 |
| Performance Evaluation | Index of Detachment Force between First and Second Layers | | | 20 | 45 | 100 | 20 | 45 | 100 |
| | Flection Fatigue Resistance Index | | | 105 | 103 | 100 | 105 | 102 | 100 |
| | Static Air Pressure Decreasing Ratio (%/month) | | | 2.0 | 3.0 | 3.9 | 2.0 | 3.0 | 3.9 |
| | Operation Stability | | | 91 | 94 | 100 | 91 | 94 | 100 |
| | Rolling Resistance Index | | | 109 | 104 | 100 | 109 | 104 | 100 |
| | Braking Stability | | | 96 | 97 | 100 | 96 | 97 | 100 |
| | Overall Evaluation | | | B | B | B | B | B | B |

[Table 4]

| Rubber Fraction of Second Layer | | | | | | | | | | | |
|---|---|---|---|---|---|---|---|---|---|---|---|
| | | | Example | | | | | | | |
| | | | 1 | 2 | 3 | 4 | 5 | 6 | 7 | 8 |
| Inner Liner Structure | First Layer | Layer Thickness (mm) | 0.25 | 0.25 | 0.25 | 0.25 | 0.25 | 0.25 | 0.25 | 0.25 |
| | | Used Formulation | A1 | A1 | A1 | A1 | A2 | A2 | A2 | A2 |
| | Second Layer | Layer Thickness (mm) | 0.05 | 0.05 | 0.05 | 0.05 | 0.05 | 0.05 | 0.05 | 0.05 |
| | | Used Formulation | B1 | B2 | B3 | B4 | B1 | B2 | B3 | B4 |
| | Distance L (mm) | | 0 | 0 | 0 | 0 | 0 | 0 | 0 | 0 |

(continued)

| Rubber Fraction of Second Layer | | | | | | | | | |
|---|---|---|---|---|---|---|---|---|---|
| | | Example | | | | | | | |
| | | 1 | 2 | 3 | 4 | 5 | 6 | 7 | 8 |
| Performance Evaluation | Index of Detachment Force between First and Second Layers | 111 | 111 | 93 | 106 | 106 | 106 | 103 | 106 |
| | Flection Fatigue Resistance Index | 126 | 121 | 124 | 123 | 118 | 116 | 111 | 114 |
| | Static Air Pressure Decreasing Ratio (%/month) | 1.9 | 1.9 | 1.8 | 1.9 | 2.0 | 2.0 | 1.9 | 2.0 |
| | Operation Stability | 103 | 109 | 107 | 107 | 118 | 118 | 118 | 118 |
| | Rolling Resistance Index | 104 | 104 | 105 | 103 | 103 | 104 | 104 | 104 |
| | Braking Stability | 125 | 123 | 122 | 124 | 115 | 113 | 114 | 114 |
| | Overall Evaluation | A | A | A | A | A | A | A | A |

[Table 5]

| Distance L | | | | | | | | |
|---|---|---|---|---|---|---|---|---|
| | | | Example | | | Comparative Example | |
| | | | 9 | 10 | 11 | 7 | 8 |
| Inner Liner Structure | First Layer | Layer Thickness (mm) | 0.25 | 0.25 | 0.25 | 0.25 | 0.25 |
| | | Used Formulation | A1 | A1 | A1 | A1 | A1 |
| | Second Layer | Layer Thickness (mm) | 0.05 | 0.05 | 0.05 | 0.05 | 0.05 |
| | | Used Formulation | B1 | B1 | B1 | B1 | B1 |
| | Distance L (mm) | | 0 | D/2 | 0.5+D/2 | 1.5+D/2 | 2.0+D/2 |
| Performance Evaluation | Index of Detachment Force between First and Second Layers | | 111 | 111 | 111 | 111 | 111 |
| | Flection Fatigue Resistance Index | | 126 | 126 | 126 | 126 | 126 |
| | Static Air Pressure Decreasing Ratio (%/month) | | 1.9 | 1.9 | 1.9 | 1.9 | 1.9 |
| | Operation Stability | | 103 | 100 | 96 | 81 | 78 |
| | Rolling Resistance Index | | 101 | 100 | 103 | 98 | 96 |
| | Braking Stability | | 125 | 113 | 97 | 77 | 67 |
| | Overall Evaluation | | A | A | A | B | B |

<Performance Test>

Each of the polymer layer stacks or polymer films produced by the Examples and the Comparative Examples or the manufactured pneumatic tires was subjected to the following performance test. The test results are shown in Tables 1 to 5.

(a) Index of Detachment Force between First and Second Layers

The polymer layer stack was heated at 170°C for 20 minutes to produce a sample for testing the detachment force after vulcanization, and a detachment test was conducted similarly to the carcass layer. A relative value was expressed by an index regarding Comparative Example 3 as a reference (index 100).

(b) Flection Fatigue Resistance Test

In conformance with JIS-K-6260 "Rubber, vulcanized or thermoplastic - Determination of flex cracking and crack growth (De Mattia type)", the polymer layer stack or the polymer film was bonded to rubber and was vulcanized to produce a predetermined test piece having a slot at its center. The slot of the test piece was cut at its center beforehand. A test was conducted to give repeated flection deformation and to measure crack growth. Specifically, crack length was measured at an ambient temperature of 23°C, a strain of 30%, a cycle of 5 Hz, at the 700,000th time, the 1,400,000th time and the 2,100,000th time, and the number of repetitions of flection deformation taken for a crack to grow 1 mm was calculated. The flection fatigue resistance of each Example and each Comparative Example was expressed by an index based on the following expression regarding the number of repetitions in Comparative Example 3 as a reference. As the flection fatigue resistance index is larger, a crack is less likely to grow, which is favorable.

$$\text{Flection Fatigue Resistance Index} = (\text{the Number of Repetitions in each Example, each Comparative Example}) / (\text{the Number of Repetitions in Comparative Example 3}) \times 100$$

(c) Static Air Pressure Decreasing Ratio Test (Tire Air Leak Test)

Each tire (195/65R15 steel radial PC tire) of the respective Examples and Comparative Examples manufactured by the above-described method was assembled to a JIS specification rim 15×6JJ, and air was introduced thereinto at an initial air pressure of 300 kPa. Then, the tire was left for 90 days at a room temperature. Then, decreasing ratio of air pressure was calculated to obtain air pressure decreasing ratio per month (30 days) (unit: %/month). A smaller static air pressure decreasing ratio is more preferable.

(d) Operation Stability Test

Each pneumatic tire of the respective Examples and Comparative Examples was mounted as wheels of a vehicle (domestically produced FF vehicle of 2000 cc), and a road test was conducted on a test course. The operation stability was evaluated by driver's sensory evaluation. Relative evaluation was made regarding the operation stability in Comparative Example 3 as 100. It shows that as the numerical value is larger, the operation stability is more excellent.

(e) Rolling Resistance Index

Using a rolling resistance tester manufactured by KOBE STEEL, LTD., the produced pneumatic tire of 195/65R15 size was assembled to a JIS specification rim 15x6JJ, and rolling resistance was measured while driving the tire at room temperatures (38°C) under the conditions of a load of 3.4 kN, an air pressure of 230 kPa, and a speed of 80 km/hour. The rolling resistance of each formulation was expressed by an index by the following equation regarding Comparative Example 3 as a reference (100). It shows that as the rolling resistance index is greater, the rolling resistance is smaller, which is preferable.

$$(\text{Rolling Resistance Index}) = (\text{Rolling Resistance of Comparative Example 3}) / (\text{Rolling Resistance of each Example}) \times 100$$

(f) Braking Stability

Each trial tire was mounted on a domestically produced FR sport-type vehicle. The brake was abruptly applied during running at 140 km/h on a test course, and the braking distance was measured. The test was conducted five rounds for each tire, and the average value was calculated for three rounds excluding the maximum and minimum values.

The result was expressed by an index value regarding Comparative Example 3 as 100. It is shown that as the numerical value is smaller, the braking distance is shorter, which is more excellent.

[Overall Judgment]

Evaluations were conducted based on judgment criteria for overall judgment shown in Table 6.

[Table 6]

| Overall Judgment | Judgment Criteria | (a) Detachment Force between First and Second Layers | (b) Flection Fatigue Resistance Test | (c) Static Air Pressure Decreasing Ratio (%/month) | (d) Operation Stability (index) | (e) Rolling Resistance (index) | (f) Braking Stability |
|---|---|---|---|---|---|---|---|
| A | All of (a) to (f) satisfy conditions on the right. | 90 or more | 100 or more | less than 2.5 | 95 or more | 100 or more | 95 or more |
| B | Any one of (a) to (f) satisfies a corresponding condition on the right. | less than 90 | less than 100 | 2.5 or more | less than 95 | less than 100 | less than 95 |

<Evaluation Result>

The test results are shown in Tables 3 to 5.

Comparative Examples 1 to 3 in Table 3 are examples in which the formulation of the second layer was B5 and the formulation of the first layer was varied among A3 to A5. Comparative Examples 4 to 6 are examples in which the formulation of the second layer was B6 and the formulation of the first layer was varied among A3 to A5.

Examples 1 to 4 in Table 4 are examples in which the formulation of the first layer was A1 and B1 to B4 varied in the type and blending quantity of rubber component were used for the second layer. Examples 5 to 8 are examples in which the formulation of the first layer was A2 and B1 to B4 varied in the type and blending quantity of rubber component were used for the second layer. Distance L from plane KC passing through the center of cross section of a cord to second layer S is 0 in any case. Examples 1 to 8 are all excellent in the overall evaluation of the index of detachment force between the first and second layers, flection fatigue resistance index, static air pressure decreasing ratio, operation stability, rolling resistance index, and braking stability.

Examples 9 to 11 and Comparative Examples 7 and 8 in Table 5 are examples in which the formulation of the first layer was A1, the formulation of the second layer was B1, and distance L from plane KC passing through the center of cross section of a cord to second layer S were varied. Comparative Examples 7 and 8 are examples in which distance L exceeds (1+D/2) mm, which is inferior in operation stability, rolling resistance index, and braking stability compared with Examples 9 to 11.

INDUSTRIAL APPLICABILITY

The pneumatic tire of the present invention can be used as a pneumatic tire for track/bus, a pneumatic tire for heavy vehicle, or the like, besides a pneumatic tire for passenger car.

REFERENCE SIGNS LIST

1 pneumatic tire; 2 tread part; 3 sidewall part; 4 bead part; 5 bead core; 6 carcass ply; 6a rubber layer; 7 belt layer; 8 bead apex; 9 inner liner; 10 polymer layer stack; 11 first layer; 12 second layer; IL1 first layer; IL2 second layer; S interface between carcass ply and second layer; K cord of carcass ply; KC plane passing through the center of cross section of cord; D diameter of cord; L distance from KC to second layer.

Claims

1.    A pneumatic tire (1) comprising an inner liner (9) disposed inwardly in the tire and a carcass ply (6) provided adjacent to said inner liner (9) and having a cord (K) embedded in a rubber layer, said inner liner (9) being composed of a polymer layer stack including

(a) a first layer of a polymer composition containing more than or equal to 5% by mass and less than or equal to 40% by mass of a styrene-isobutylene-styrene triblock copolymer and more than or equal to 60% by mass and less than or equal to 95% by mass of at least one kind of rubber component selected from the group consisting of natural rubber, isoprene rubber and butyl rubber, said first layer having a thickness of 0.05 mm to 0.6 mm, and
(b) a second layer of a polymer composition containing more than or equal to 10% by mass and less than or equal to 85% by mass of at least either one of a styrene-isoprene-styrene triblock copolymer and a styrene-isobutylene diblock copolymer as well as more than or equal to 15% by mass and less than or equal to 90% by mass of at least one kind of rubber component selected from the group consisting of natural rubber, isoprene rubber and butyl rubber, said second layer having a thickness of 0.01 mm to 0.3 mm, said second layer being arranged so as to be in contact with the rubber layer of said carcass ply (6), a distance L from a plane passing through the center of cross section of said cord (K) to said second layer being more than or equal to 0 and less than or equal to (1+D/2) mm where D denotes the diameter of said cord (K).

2.    The pneumatic tire (1) according to claim 1, wherein a rubber component of the polymer composition of said first layer contains butyl rubber.

3.    The pneumatic tire (1) according to claim 1 or 2, wherein

the polymer compositions of said first and second layers contain more than or equal to 0.1 part by mass and less than or equal to 5 parts by mass of sulfur, more than or equal to 1 part by mass and less than or equal to 5 parts by mass of stearic acid, more than or equal to 0.1 part by mass and less than or equal to 8 parts by mass of zinc oxide, more than or equal to 0.1 part by mass and less than or equal to 5 parts by mass of an antioxidant, and more than or equal to 0.1 part by mass and less than or equal to 5 parts by mass of a vulcanization accelerator with respect to 100 parts by mass of a polymer component.

4. The pneumatic tire (1) according to any one of claims 1 to 3, wherein an interface between said polymer layer stack and the rubber layer of said carcass ply (6) has an uneven shape.

## Patentansprüche

1. Luftreifen (1), umfassend einen Innerliner (9), der nach innen hin in dem Reifen angeordnet ist, und eine Karkasslage (6), die benachbart zu dem Innerliner (9) vorgesehen ist und einen Kord (K) aufweist, der in eine Kautschukschicht eingebettet ist,
wobei der Innerliner (9) aus einem Polymerschichtstapel zusammengesetzt ist, der umfasst

   (a) eine erste Schicht aus einer Polymerzusammensetzung, die mehr als oder gleich 5 Masse-% und weniger als oder gleich 40 Masse-% eines Styrol-Isobutylen-Styrol-Triblockcopolymers und mehr als oder gleich 60 Masse-% und weniger als oder gleich 95 Masse-% von zumindest einer Sorte einer Kautschukkomponente umfasst, die aus der Gruppe ausgewählt ist, die aus Naturkautschuk, Isoprenkautschuk und Butylkautschuk besteht, wobei die erste Schicht eine Dicke von 0,05 mm bis 0,6 mm ausweist, und
   (b) eine zweite Schicht aus einer Polymerzusammensetzung, die mehr als oder gleich 10 Masse-% und weniger als oder gleich 85 Masse-% von einem Styrol-Isopren-Styrol-Triblockcopolymer und/oder einem Styrol-isobutylen-Diblockcopolymer sowie mehr als oder gleich 15 Masse-% und weniger als oder gleich 90 Masse-% von zumindest einer Sorte einer Kautschukkomponente umfasst, die aus der Gruppe ausgewählt ist, die aus Naturkautschuk, Isoprenkautschuk und Butylkautschuk besteht, wobei die zweite Schicht eine Dicke von 0,01 mm bis 0,3 mm aufweist,
   wobei die zweite Schicht derart angeordnet ist, dass sie mit der Kautschukschicht der Karkasslage (6) in Kontakt steht,
   wobei ein Abstand L von einer Ebene, die durch die Mitte des Querschnitts des Kords (K) verläuft, zu der zweiten Schicht größer als oder gleich 0 und kleiner als oder gleich (1+D/2) mm ist, wobei D den Durchmesser des Kords (K) bezeichnet.

2. Luftreifen (1) nach Anspruch 1, wobei eine Kautschukkomponente der Polymerzusammensetzung der ersten Schicht Butylkautschuk enthält.

3. Luftreifen (1) nach Anspruch 1 oder 2, wobei die Polymerzusammensetzungen der ersten und zweiten Schicht mehr als oder gleich 0,1 Masseteile und weniger als oder gleich 5 Masseteile Schwefel, mehr als oder gleich 1 Masseteil und weniger als oder gleich 5 Masseteile Stearinsäure, mehr als oder gleich 0,1 Masseteile und weniger als oder gleich 8 Masseteile Zinkoxid, mehr als oder gleich 0,1 Masseteile und weniger als oder gleich 5 Masseteile eines Antioxidationsmittels und mehr als oder gleich 0,1 Masseteile und weniger als oder gleich 5 Masseteile eines Vulkanisationsbeschleunigers mit Bezug auf 100 Masseteile einer Polymerkomponente enthält.

4. Luftreifen (1) nach einem der Ansprüche 1 bis 3, wobei eine Grenzfläche zwischen dem Polymerschichtstapel und der Kautschukschicht der Karkasslage (6) eine unebene Form aufweist.

## Revendications

1. Bandage pneumatique (1) comprenant un doublage intérieur (9) disposé à l'intérieur du pneumatique et une nappe de carcasse (6) prévue adjacente audit doublage intérieur (9) et ayant un câblé (K) noyé dans une couche de caoutchouc,
ledit doublage intérieur (9) étant composé d'un empilement de couches polymère incluant

   (a) une première couche d'une composition polymère contenant une quantité supérieure ou égale à 5 % en masse et inférieure ou égale à 40 % en masse d'un copolymère tribloc styrène-isobutylène-styrène, et une quantité supérieure ou égale à 60 % en masse et inférieure ou égale à 95 % en masse d'au moins une sorte de composant au caoutchouc sélectionné parmi le groupe comprenant caoutchouc naturel, caoutchouc isoprène et caoutchouc au butyle, ladite première couche ayant une épaisseur de 0,05 mm à 0,6 mm, et

(b) une seconde couche d'une composition polymère contenant une quantité supérieure ou égale à 10 % en masse et inférieure ou égale à 85 % en masse de l'un au moins parmi un copolymère tribloc styrène-isoprène-styrène et un copolymère dibloc styrène-isobutylène, ainsi qu'une quantité supérieure ou égale à 15 % en masse et inférieure ou égale à 90 % en masse d'au moins une sorte de composant au caoutchouc sélectionné parmi le groupe comprenant le caoutchouc naturel, le caoutchouc isoprène et le caoutchouc au butyle, ladite seconde couche ayant une épaisseur de 0,01 mm à 0,3 mm,

ladite seconde couche étant agencée de manière à être en contact avec la couche de caoutchouc de ladite nappe de carcasse (6),

une distance L depuis un plan passant par le centre de la section transversale dudit câblé (K) jusqu'à la seconde couche étant supérieure ou égale à 0 et inférieure ou égale à (1+D/2) mm où D désigne le diamètre dudit câblé (K).

2.  Bandage pneumatique (1) selon la revendication 1, dans lequel un composant caoutchouc de la composition polymère de ladite première couche contient du caoutchouc au butyle.

3.  Bandage pneumatique (1) selon la revendication 1 ou 2, dans lequel les compositions polymères de ladite première et de ladite seconde couche contiennent une quantité supérieure ou égale à 0,1 partie en masse et inférieure ou égale à 5 parties en masse de soufre, une quantité supérieure ou égale à 1 partie en masse et inférieure ou égale à 5 parties en masse d'acide stéarique, une quantité supérieure ou égale à 0,1 partie en masse et inférieure ou égale à 8 parties en masse d'oxyde de zinc, une quantité supérieure ou égale à 0,1 partie en masse et inférieure ou égale à 5 parties en masse d'un antioxydant, et une quantité supérieure ou égale à 0,1 partie en masse et inférieure ou égale à 5 parties en masse d'un accélérateur de vulcanisation, par rapport à 100 parties en masse d'un composant polymère.

4.  Bandage pneumatique (1) selon l'une quelconque des revendications 1 à 3, dans lequel une interface entre ledit empilement de couches polymère et la couche de caoutchouc de ladite nappe de carcasse (6) a une forme inégale.

FIG.1

FIG.2

FIG.3

FIG.4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 9019987 A
- JP 2004136766 A
- JP 2007291256 A
- JP 9165469 A
- JP 62048704 A
- JP 6462308 A